# EUROPÄISCHE PATENTSCHRIFT

(11) **EP 3 172 476 B1**
(45) Veröffentlichungstag und Bekanntmachung des Hinweises auf die Patenterteilung: **10.07.2019**
(21) Anmeldenummer: 15723498.0
(22) Anmeldetag: 18.05.2015
(51) Int. Cl.: F16L 53/38, H05B 3/56, H05B 3/04, H05B 3/06, H05B 3/14

(54) **BEHEIZBARER SCHLAUCH**
HEATABLE TUBE
TUYAU SOUPLE POUVANT ÊTRE CHAUFFÉ

(30) Priorität: 25.07.2014 DE 102014214690
(43) Veröffentlichungstag der Anmeldung: 31.05.2017
(73) Patentinhaber: ContiTech Techno-Chemie GmbH, 61184 Karben (DE)
(72) Erfinder: DANIEL, Gunther, 61169 Friedberg (DE); STEIN, Joachim, 61169 Friedberg (DE)
(74) Vertreter: Finger, Karsten
(86) Internationale Anmeldenummer: PCT/EP2015/060828
(87) Internationale Veröffentlichungsnummer: WO 2016/012125

(56) Entgegenhaltungen:
- EP-A1- 0 456 024
- EP-A1- 1 958 832
- EP-A2- 1 070 642
- DE-A1- 3 414 284
- DE-A1-102011 120 356
- DE-U1-202007 007 125

## Beschreibung

Die Erfindung betrifft einen beheizbaren Schlauch zur Leitung fluider, gasförmiger und bzw. oder pastöser Medien gemäß dem Oberbegriff des Anspruchs 1 sowie ein Kraftfahrzeug mit einem derartigen beheizbaren Schlauch gemäß dem Anspruch 10. Beheizbare Schläuche sind insbesondere als elektrisch beheizbare Schläuche z.B. für den Einsatz in Kraftfahrzeugen vielfältig bekannt. Alternativ sind beheizbare Schläuche bekannt, bei denen ein erwärmtes Medium z.B. in Form einer Flüssigkeit verwendet wird. Je nach Temperatur dieses Mediums in Relation zum im Schlauch geführten Medium kann letzteres erwärmt oder auch gekühlt werden. Das in diesen Schläuchen zwischen zwei Anschlussstellen fließende Medium wird von diesen Schläuchen beheizt bzw. gekühlt.

Eine Anwendung hierfür ist z.B. das Erwärmen von auf Harnstoff basierenden Flüssigkeiten, die bei der Abgasnachbehandlung von Automobil-Dieselmotoren zur Reduktion der Stickoxide eingesetzt werden, bekannt als SCR-Technologie (selective catalytic reduction). Ein derartiges Additiv ist unter dem Markennamen AdBlue® bekannt. Die Erwärmung kann erforderlich sein, weil das Additiv bei weniger als ca. minus 10°C gefriert.

Ein elektrisch beheizbarer Schlauch mit wenigstens einem elektrischen Heizleiter, welcher der Erwärmung eines im Schlauch fließenden Mediums dient, ist z.B. aus der DE 102 01 920 A1 bekannt, wobei sich der Heizleiter über zumindest einen Teilbereich der Schlauchlänge erstreckt und aus einer metallischen Seele und einer Ummantelung besteht. Der Heizleiter ist üblicherweise in einer Schicht des Schlauches eingebettet. Bei einem mehrschichtigen Schlauch kann der Heizleiter auch zwischen zwei Schichten angeordnet sein. Bei dieser Art der Erwärmung des Fluids erwärmt der elektrische Heizleiter das ihn umgebende Schlauchmaterial insgesamt.

Nachteilig ist dabei, dass nur ein Teil der Heizleistung in das Innere des Schlauches und damit auf das Fluid übertragen wird. Ein Teil der Heizleistung wird jedoch nach außen übertragen und ungenutzt an die Umgebung abgegeben, d.h. dieser Teil der Heizleistung stellt einen Verlust dar. Vielmehr kann hierdurch eine ungewollte Erwärmung weiterer Fahrzeugkomponenten erfolgen, die mit dem beheizbaren Schlauch in Kontakt kommen bzw. von ihm Wärme aufnehmen können.

Der Einsatz beheizbarer Schläuche ist auch für Scheibenwischanlagen bekannt, um dort das Einfrieren des Wischwassers zu verhindern bzw. das gefrorene Wischwasser schneller bzw. überhaupt wieder aufzutauen. Bei derartigen vergleichsweise dünnen Schläuchen wird der Heizleiter mit einer Ummantelung, die ihn gegen das Wischwasser elektrisch isoliert, innerhalb der Schlauchleitung geführt. Der ummantelte Heizleiter ist dabei lose innerhalb des Innenvolumens des Schlauches angeordnet, sozusagen freischwebend im Wischwasser. An den Enden der Schlauchleitung wird der ummantelte Heizleiter z.B. an den Anschlüssen aus dem Wischwasser herausgeführt. Diese Durchgänge des ummantelten Heizleiters durch die Anschlüsse sind üblicherweise mittels O-Ringen aus Elastomermaterial oder mittels eines elastomeren Körpers abgedichtet.

Die EP 2 706 208 A1 betrifft einen Steckverbinder mit einem Gehäuse, das einen Aufnahmeraum, einen Anschlussstutzen und einen den Aufnahmeraum und den Anschlussstutzen verbindenden Kanal aufweist, wobei im Innen des Kanals eine Heizzone vorgesehen ist. Zur schnellen Erwärmung einer Flüssigkeitsleitung mit einem derartigen Steckverbinder ist vorgesehen, das ein Wärmeleitelement zwischen der Heizzone und dem Aufnahmeraum angeordnet ist. Das Wärmeelement erstreckt sich in den Aufnahmeraum hinein. Im Aufnahmeraum ist eine Dichtungsanordnung in Form von zwei O-Ringen angeordnet und das Wärmeelement ragt durch die Dichtungsanordnung hindurch.

Die EP 2 527 704 A1 betrifft einen Verbinder für eine Fluidleitung mit einem Gehäuse, das einen Anschlussstutzen, der mit einem roher verbindbar ist, und eine Verbindungsgeometrie, die mit einem Gegenelement verbindbar ist, aufweist. Um ein Hilfselement aus einer Fluidleitung herausführen zu können und das Risiko einer Leckage klein zu halten, ist vorgesehen, dass das Gehäuse eine Austrittsöffnung aufweist, durch die mindestens ein Hilfselement aus dem Gehäuse nach außen geführt ist, wobei das Hilfselement durch einen elastomeren Körper geführt ist, der sich bei einer Druckbeaufschlagung parallel zur Durchtrittsrichtung des Hilfselements durch den elastomeren Körper senkrecht zur Durchtrittsrichtung ausdehnt und der gegebenenfalls durch eine Haltereinrichtung in der Austrittsöffnung gehalten ist. Die Halteeinrichtung kann eine Kappe ausweisen, die die Austrittsöffnung zumindest teilweise überdeckt und die auf das Gehäuse aufgeschraubt, aufgeprellt, aufgepresst, aufgeklebt oder aufgeschweißt sein kann.

Vorteilhaft ist bei diesem im Fluid angeordneten ummantelten Heizleiter gegenüber der Anordnung innerhalb der Außenwand des Schlauches, dass die elektrisch erzeugte Wärme vollständig an das den Heizleiter umgebende Wischwasser abgegeben wird.

Jedoch lässt sich die Anordnung des im Fluid angeordneten Heizleiters nicht auf den Anwendungsfall der Harnstoff basierenden Flüssigkeiten im SCR-Bereich übertragen, weil diese chemisch und bzw. oder physikalisch sowohl die Ummantelung des Heizleiters als auch die Dichtung aus Elastomermaterial angreifen würden. Ersterer Fall würde zur Beeinträchtigung bis Zerstörung des Heizleiters führen, der zweite Fall zu Undichtigkeiten.

Die DE 20 2007 007 125 U1 offenbart einen beheizbaren Schlauch mit einem ersten elektrischen Leiter und einem zweiten elektrischen Leiter, die elektrisch leitend miteinander verbunden sind und von denen mindestens einer wenigstens einen Abschnitt aufweist, der als Heizleiter ausgebildet ist, sowie einer den ersten elektrischen Leiter umgebenden Ummantelung aus einem elektrisch isolierenden Material, wobei der zweite elektrische Leiter in der Ummantelung aufgenommen ist.

Eine Aufgabe der vorliegenden Erfindung ist es, einen beheizbaren Schlauch der eingangs beschriebenen Art bereit zu stellen, dessen Heizleiter im Innenvolumen des Schlauches angeordnet und der möglichst einfach und leckagesicher herzustellen ist.

Die Aufgabe wird erfindungsgemäß durch einen beheizbaren Schlauch zur Leitung fluider, gasförmiger und bzw. oder pastöser Medien mit den Merkmalen gemäß Anspruch 1 sowie ein Kraftfahrzeug mit den Merkmalen gemäß Anspruch 10 gelöst. Vorteilhafte Weiterbildungen sind in den Unteransprüchen beschrieben.

Somit betrifft die vorliegende Erfindung einen beheizbaren Schlauch zur Leitung fluider, gasförmiger und bzw. oder pastöser Medien einer Außenwand, die ein Innenvolumen einschließt, und einem Heizelement, welches innerhalb des Innenvolumens angeordnet ist. Dies ist vorteilhaft, weil das Heizelement hierdurch direkt mit dem Medium in Kontakt steht und seine Heizleistung durchgängig, direkt und bestmöglich an dieses abgeben kann. Dies reduziert die Wärmeverluste an die Umgebung und erhöht den Wirkungsgrad des beheizbaren Schlauches. Bei einem zylindrischen Schlauch ist das Heizelement entsprechend zylindrisch ausgebildet und schwebt sozusagen frei im Medium wie z.B. einer fluiden Harnstofflösung eines SCR-Systems.

Das Heizelement weist einen ersten Heizleiter und einen zweiten Heizleiter auf. Die Heizleiter können medienführende Leiter z.B. in Form von Schläuchen sein, in denen ein erhitztes Medium wie z.B. eine Flüssigkeit geleitet wird. Als elektrische Heizleiter sind diese zum einen elektrisch leitfähig, um elektrischen Strom über sich leiten zu können, weisen jedoch zum anderen einen derart hohen elektrischen Widerstand auf, dass ausreichend elektrische Stromwärmeverluste erzeugt werden, um das umgebende Medium für den jeweiligen Anwendungsfall ausreichend zu erwärmen..

Die elektrischen Heizleiter können metallische oder textile Leiter sein. Beispielsweise kann ein elektrischer Heizleiter eine Legierung aus Chrom-Nickel oder Kupfer enthalten oder alleinig aus dieser Legierung oder diesem unlegierten Material bestehen. Vorteilhaft ist hierbei, dass diese Metalle einen vergleichbar hohen elektrischen Widerstand aufweisen und hierdurch höhere elektrische Strom-Wärme-Verluste erzeugen können als Metalle mit niedrigem elektrischem Widerstand. Als textiler Leiter können Materialien verwenden werden, welche eine elektrische Leitfähigkeit aufweisen, aber gleichzeitig die Flexibilität eines textilen Materials aufweisen. Die textilen Leiter können Fasern aufweisen, die Monofilamente oder Multifilamente sein können, welche als Garn oder Zwirn ausgebildet sein können. Diese können einen linienförmigen textilen Leiter bilden oder als textile Flächengebilde ausgebildet sein. Als Material können Kohlenstoffe wie z.B. Karbon-Fasern oder Kohlenstoffnanoröhrchen (Carbon Nano Tubes) verwendet werden.

Der beheizbare Schlauch ist dadurch gekennzeichnet, dass der erste Heizleiter und der zweite Heizleiter durch eine Heizleiterverbindung zu einer Schleife verbunden sind, so dass ein Heizleiter einen Hinleiter und der andere Heizleiter einen Rückleiter bildet.

Auf diese Weise bilden die beiden Heizleiter über die Heizleiterverbindung einen auf einer Seite geschlossenen Kreis. Werden als Heizleiter fluidführende Schläuche eingesetzt, so kann das Fluid durch den ersten Heizleiter als Hinleiter in das Heizelement hineinströmen, wird dort durch die Heizleiterverbindung umgelenkt und kann durch den zweiten Heizleiter als Rückleiter wieder aus dem Heizelement hinausströmen. Hierzu sind die beiden Heizleiter an ihren jeweils offenen Enden an Komponenten anzuschließen, welche z.B. mittels Pumpe für den Fluidstrom sorgen und dem Fluid die Wärme zuführen, welche es bei der Durchströmung des Heizelements an dieses bzw. das das Heizelement umgebende Fluid abgibt. Dabei nimmt durch diese Wärmeabgabe die Temperatur des Fluid vom Eintritt in den Hinleiter zum Austritt aus dem Rückleiter ab.

Diese Anordnung ist auch zum Abkühlen des Fluid im Schlauch anwendbar, welches dann als kühlbarer Schlauch zu bezeichnen wäre. Dieser würde dann Kühlleiter ausweisen, welche ein gekühltes Fluid durch das Kühlelement leiten würden. Die Anordnung der Elemente wäre jedoch identisch zur beschriebenen Verwendung als beheizbarer Schlauch.

Werden als Heizleiter elektrische Heizleiter verwendet, so kann bei einer Speisung mit Gleichstrom ebenfalls der erste Heizleiter als Hinleiter den elektrischen Strom in das Heizelement hineinleiten und der zweite Heizleiter als Rückleiter den elektrischen Strom wieder aus dem Heizelement hinaus leiten. In diesem Fall sind beide elektrischen Heizleiter an eine elektrische Strom- bzw. Spannungsquelle anzuschließen. Wird Wechselstrom bzw. Wechselspannung verwendet, so wechseln sich die beiden Heizleiter in ihrer Funktion als Hin- und Rückleiter mit der Frequenz des Wechselstroms bzw. der Wechselspannung ab.

Der Erfindung liegt dabei die Erkenntnis zugrunde, dass durch die schleifenartige Verbindung der beiden Heizleiter über die Heizleiterverbindung auf einer Seite des beheizbaren Schlauches auf Anschlüsse verzichtet werden kann. Dies vereinfacht die Konstruktion und Herstellung des beheizbaren Schlauches und vereinfacht die Abdichtung des Heizelements gegenüber der Umgebung. Gleichzeitig kann die z.B. für Scheibenwischeranlagen bekannte Anordnung eines Heizelements zum Erwärmen des Wischwassers, nämlich innerhalb des zu erwärmenden Mediums angeordnet, einfach und kostengünstig zur Anwendung in der SCR-Technologie weitergebildet und hierdurch auch auf diesem Gebiet die Vorteile der möglichst direkten und vollständigen Wärmeabgabe an die Harnstoffflüssigkeit genutzt werden können.

Gemäß der vorliegenden Erfindung wird das Heizelement durch wenigstens ein erstes Adapterelement hindurch in das Innenvolumen geführt. Über dieses erste Adapterelement kann der beheizbare Schlauch mit anderen Schläuchen und bzw. oder Aggregaten verbunden werden. Dieses Adapterelement ist vorzugsweise ein sog. Quick-Connector. Um auf weitere Elemente zu verzichten, wird das Heizelement durch das erste Adapterelement aus dem Innenvolumen des Schlauches heraus bzw. in dieses hinein geführt, so dass lediglich die Verbindungen zwischen Schlauch und erstem Adapterelement und erstem Adapterelement und Heizelement abgedichtet werden müssen.

Gemäß einem weiteren Aspekt der vorliegenden Erfindung ist die Heizleiterverbindung relativ zum ersten Adapterelement auf der entgegengesetzten Seite wie das Innenvolumen abgeordnet. Mit anderen Worten ist die Heizleiterverbindung außerhalb des Innenvolumens angeordnet. Auf diese Weise ist die Heizleiterverbindung einfach von außen zugänglich, um sie bei der Montage herzustellen oder auch später zu inspizieren, zu warten oder zu reparieren. Dabei kann das Heizleiterelement durch das erste Adapterelement herausgeführt werden und die beiden Heizleiter werden dann freigelegt und mit der Heizleiterverbindung versehen, welche z.B. als aufsteckbares Element ausgebildet sein kann. Alternativ kann die Heizleiterverbindung auch schon vorher hergestellt worden sein, so dass der Heizleiter mit dem Ende der Heizleiterverbindung aus dem ersten Adapterelement herausgeführt wird.

Gemäß einem weiteren Aspekt der vorliegenden Erfindung ist die Heizleiterverbindung relativ zum ersten Adapterelement auf der gleichen Seite wie das Innenvolumen abgeordnet. Mit anderen Worten ist die Heizleiterverbindung innerhalb des Innenvolumens angeordnet. Auf diese Weise kann auf eine Durchführung durch das erste Adapterelement verzichtet werden, wodurch auf eine Abdichtung an dieser Stelle verzichtet werden kann. Dies vermeidet Leckageprobleme an dieser Stelle. Zur sicheren Positionierung des Heizleiters kann dieser mit seinem Ende mit der Heizleiterverbindung von Innen an dem ersten Adapterelement befestigt werden.

Gemäß einem weiteren Aspekt der vorliegenden Erfindung sind der erste Heizleiter, der zweite Heizleiter und die Heizleiterverbindung ein elektrisch leitfähiges Kabel, ein elektrisch leitfähiger Faden oder ein elektrisch leitfähiges Element sind. Unter einem Kabel wird ein metallischer Leiter verstanden, vorzugsweise aus Kupfer, welcher aus einer einzigen oder mehreren, vorzugsweise miteinander verzwirnten Litzen bestehen kann. Ein elektrisch leitfähiger Faden ist ein textiles elektrisch leitfähiges Element wie z.B. aus einem elektrisch leitfähigen Kunststoffmaterial. Ein elektrisch leitfähiges Element kann z.B. ein im Wesentlichen punktförmiges Heizelement sein, welches über elektrische Zuleitungen gespeist wird und seine Heizleistung lokal abgibt während ein Kabel oder ein Faden eine gleichmäßigen Querschnitt aufweisen und ihre Heizleistung über ihre Länge im Wesentlichen gleichbleibend abgeben.

Gemäß einem weiteren Aspekt der vorliegenden Erfindung sind der erste Heizleiter, der zweite Heizleiter und die Heizleiterverbindung ein PTC-Widerstand. Ein PTC-Widerstand (Positive Temperature Coefficient) weist ein stromleitendes Material auf, welches bei tieferen Temperaturen den Strom besser leiten kann als bei hohen Temperaturen. Sein elektrischer Widerstand vergrößert sich bei steigender Temperatur. Diese Art von Widerständen besitzt somit einen positiven Temperaturkoeffizienten. Dies ist für diese Anwendung vorteilhaft, weil die elektrischen Heizleiter und die Heizleiterverbindung in einer erwärmten Umgebung betrieben werden sollen, d.h. sie während ihres Einsatzes dauerhaft ihrer eigenen Wärme ausgesetzt sind und in dieser betrieben werden.

Gemäß einem weiteren Aspekt der vorliegenden Erfindung weist die Außenwand ein Elastomer, einen Kunststoff, insbesondere ein Polyamid (PA), insbesondere PA 12 oder Polyphthalamid (PPA) oder Polyphenylensulfid (PPS), oder ein Polyurethan auf. Die Verwendung von Elastomeren ist aufgrund ihrer Elastizität vorteilhaft. Die Verwendung von Kunststoffen und insbesondere Polyamiden ist aufgrund ihrer hervorragenden Festigkeit und Zähigkeit vorteilhaft. Ferner weisen sie eine gute chemische und physikalische Beständigkeit gegenüber organischen Lösungsmitteln auf und sie lassen sich gut verarbeiten. Polyamid 12 ist insbesondere aufgrund seiner chemischen und physikalischen Beständigkeit zur Verwendung mit dem Medium Harnstofflösung geeignet und langzeiterprobt. Beispielsweise weist PA 12 eine gute Hydrolysebeständigkeit auf, so dass die physikalischen Kennwerte des Materials auch bei einem dauerhaften Einsatz von z.B. 3.000h bis 5.000h vergleichsweise geringer abnehmen als bei anderen Polyamiden. Die Kunststoffe PPA und PPS eignen sich für Anwendungen bei höheren Temperaturen und sind ferner sehr gut (laser-)schweißbar

Gemäß der vorliegenden Erfindung werden der erste Heizleiter und der zweite Heizleiter oder der erste Heizleiter, der zweite Heizleiter und die Heizleiterverbindung gegenüber dem Innenvolumen jeweils einzeln oder gemeinsam von einer ersten Heizleiterisolierung umgeben. Auf diese Weise kann eine chemische und bzw. oder physikalische, insbesondere elektrische Isolierung zwischen dem zu erwärmenden Fluid im Innenvolumen und den Heizleitern mit Heizleiterverbindung erfolgen.

Gemäß einem weiteren Aspekt der vorliegenden Erfindung weist die erste Heizleiterisolierung ein Fluorcarbon, ein Perfluor (Ethylen-Propylen-) Kunststoff (FEP), ein modifiziertes Fluoralkoxy (MFA) oder ein Perfluoralkoxylalkan (PFA),, auf. Fluorcarbone zeichen sich durch ihren wasserabweisenden Charakter aus. Besonders vorteilhaft ist die Verwendung von FEP (auch Fluorinated Ethylene Propylene), welches als wasserabweisende Beschichtung für flexible Substrate eingesetzt wird.

Gemäß der vorliegenden Erfindung werden der erste Heizleiter und der zweite Heizleiter oder der erste Heizleiter, der zweite Heizleiter und die Heizleiterverbindung gegenüber dem Innenvolumen jeweils einzeln oder gemeinsam von einer zweiten Heizleiterisolierung umgeben, welche die erste Heizleiterisolierung umgibt. Die zweite Heizleiterisolierung bietet die Möglichkeit, sie auf ihre Isolierwirkung gegenüber dem Medium, welches im Innenvolumen geleitet wird, hin auszulegen, ohne den bisherigen Aufbau des elektrischen Heizleiters und seiner ersten Heizleiterisolierung zu verändern. Dies vereinfacht die Anwendung und reduziert die Kosten.

Die Auslegung der zweiten Heizleiterisolierung kann z.B. hinsichtlich der chemischen Beständigkeit z.B. gegenüber einer fluiden Harnstofflösung eines SCR-Systems erfolgen. Alternativ oder zusätzlich kann die Auslegung hinsichtlich einer möglichst hohen Wärmeleitfähigkeit erfolgen, um die Wärme vom elektrischen Heizleiter möglichst verlustarm und schnell an das Medium weiterleiten zu können. Alternativ oder zusätzlich kann die Auslegung hinsichtlich einer hohen Druckbeständigkeit erfolgen, falls das Medium unter hohem Druck geleitet wird.

Die gemeinsame Ummantelung der beiden Heizleiter mit Heizleiterverbindung vereinfacht den Aufbau des Heizelements und hält die beiden Heizleiter zusammen. Die getrennte Ummantelung der beiden Heizleiter mit Heizleiterverbindung erhöht die Wärmeabgabe, weil das zu erwärmende Fluid auch zwischen die zweifach ummantelten Heizleiter gelangen kann.

Gemäß einem weiteren Aspekt der vorliegenden Erfindung weist die zweite Heizleiterisolierung ein Elastomer, einen Kunststoff, insbesondere ein Polyamid (PA), insbesondere PA 12 oder Polyphthalamid (PPA) oder Polyphenylensulfid (PPS), oder ein Polyurethan aufweist. Für die Heizleiterisolierung gelten die gleichen Eigenschaften und Vorteile wie bereits zuvor bzgl. der Außenwand beschrieben.

Gemäß der vorliegenden Erfindung sind die Außenwand und wenigstens die zweite Heizleiterisolierung über das erste Adapterelement und bzw. oder ein zweites Adapterelement verbunden. Über dieses Adapterelement kann der elektrisch beheizbare Schlauch mit anderen Elementen wie weiteren Schläuchen oder Aggregaten verbunden werden. Das Adapterelement weist dabei auch einen Durchlass auf, um das Fluid in das Innenvolumen hinein bzw. aus dem Innenvolumen heraus leiten und mit den anderen Schläuchen bzw. Aggregaten austauschen zu können. Vorzugsweise ist das Adapterelement ein Schnell-Verbindungselement (Quick-Connector), welches die Montage des elektrisch beheizbaren Schlauches vereinfacht und hierdurch beschleunigt.

Gemäß der vorliegenden Erfindung weist das erste Adapterelement und bzw. oder das zweite Adapterelement einen Adapterkörper auf, der mit der zweiten Heizleiterisolierung mittels einer stoffschlüssigen Verbindung verbunden ist. Diese stoffschlüssige Verbindung erhöht die Dichtigkeit dieser Verbindung, so dass insbesondere bei höheren Drücken des Mediums die Dichtigkeit gegeben bleibt. Ferner kann auf separate Dichtungselemente wie z.B. einen O-Ring verzichtet werden, was den Aufbau vereinfacht.

Gemäß einem weiteren Aspekt der vorliegenden Erfindung ist die stoffschlüssige Verbindung eine Laserschweißverbindung, eine Rotationsschweißverbindung oder eine Klebeverbindung. Alle diese Verbindungsarten führen zu einer drucksicheren Verbindung. Laser- und Rotationsschweißen wird vorzugsweise bei einer zweiten Heizleiterisolierung aus Polyamid eingesetzt, eine Klebeverbindung insbesondere bei einer zweiten Heizleiterisolierung aus Elastomermaterial,

Die vorliegende Erfindung betrifft auch ein Kraftfahrzeug mit einem beheizbaren Schlauch wie zuvor beschrieben. Auf diese Weise können die zuvor beschriebenen Vorteile bei einem Kraftfahrzeug, insbesondere bei einem SCR-System eines Kraftfahrzeugs, genutzt werden.

Drei Ausführungsbeispiele und weitere Vorteile der Erfindung werden nachstehend im Zusammenhang mit den folgenden Figuren erläutert. Darin zeigt:
- Fig. 1: eine schematische Schnittdarstellung eines erfindungsgemäßen beheizbaren Schlauches gemäß einer ersten Ausführungsform;
- Fig. 2: eine schematische Schnittdarstellung eines erfindungsgemäßen beheizbaren Schlauches gemäß einer zweiten Ausführungsform; und
- Fig. 3: eine schematische Schnittdarstellung eines erfindungsgemäßen beheizbaren Schlauches gemäß einer dritten Ausführungsform.

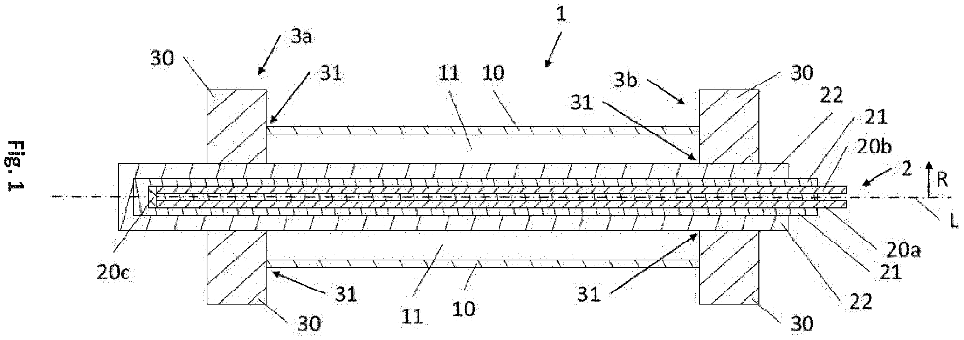

Fig. 1 zeigt eine schematische Schnittdarstellung eines erfindungsgemäßen beheizbaren Schlauches 1 gemäß einer ersten Ausführungsform. Der beheizbare Schlauch 1 ist zylindrisch entlang einer Längsachse L ausgebildet. Der beheizbare Schlauch 1 ist geschlossen dargestellt mit einem ersten Adapterelement 3a an seinem linken Ende und einem zweiten Adapterelement 3b an seinem rechten Ende.

Der beheizbare Schlauch 1 weist eine elastische Außenwand 10 aus einem elastomeren Material auf, welche ein Innenvolumen 11 einschließt, welches auf beiden Seiten durch die Adapterelemente 3a, 3b begrenzt ist. Innerhalb dieses Innenvolumens 11 kann ein Medium wie z.B. ein Fluid geleitet werden. Bei einem SCR-System leitet der SCR-Schlauch 1 eine wässrige Harnstofflösung als Fluid.

Weitestgehend freischwebend im Innenvolumen 11 bzw. Fluid ist auf der Längsachse L ein Heizelement 2 in Form eines elektrischen Heizelements 2 angeordnet, welches in radialer Richtung R gleichmäßig zur Innenseite der Außenwand 10 beabstandet angeordnet ist. Diese Anordnung ist jedoch schematisch zum besseren Verständnis derart dargestellt, da das freischwebende elektrische Heizelement 2 sich an den Verlauf des Schlauches 1 anpasst, welcher je nach Anwendungsfall auch gebogen sein kann.

Das elektrische Heizelement 2 weist einen ersten elektrischen Heizleiter 20a und einen zweiten elektrischen Heizleiter 20b in Form dünner Kupferkabel oder dünner kupferhaltigen Kabel auf, welche von Strom durchflossen werden kann, um elektrische Wärmeverluste zu erzeugen und mit diesen das Fluid im Innenvolumen 11 zu erwärmen. Bei einer Speisung mit Gleichstrom (nicht dargestellt) bildet der erste elektrische Heizleiter 20a den Hinleiter und der zweite elektrische Heizleiter 20b den Rückleiter. Die beiden elektrischen Heizleiter 20a, 20b werden über eine Heizleiterverbindung 20c miteinander stromführend verbunden, so dass sie zusammen eine elektrischen Heizleiter 20a, 20b bilden, welcher innerhalb des Heizleiters 2 schleifenförmig angeordnet ist. Hierdurch können die elektrischen Anschlüsse an einer Seite des beheizbaren Schlauches 1 vorgesehen werden.

Beide elektrischen Heizleiter 20a, 20b sowie die Heizleiterverbindung 20c sind gemeinsam von einer ersten Heizleiterisolierung 21 ummantelt, die sie grundsätzlich gegen Flüssigkeiten chemisch isolieren und gleichzeitig eine gute Wärmeübertragung zum Innenvolumen 11 hin ermöglicht. Zusätzlich ist die erste Heizleiterisolierung 21 von einer zweiten Heizleiterisolierung 22 überzogen, die die erste Heizleiterisolierung 21 gegenüber dem Innenvolumen 11 bzw. dem Fluid wie z.B. der wässrigen Harnstofflösung zusätzlich insbesondere chemisch isoliert. Auf diese Weise kann der Vorteil der direkten Wärmeübertragung des freischwebenden elektrischen Heizelements 2 auch bei Anwendungen mit chemisch aggressiven Fluiden wie der wässrigen Harnstofflösung eines SCR-Systems genutzt werden. Die elektrischen Heizleiter 20a, 20b sowie die Heizleiterverbindung 20c sind dabei bis auf die Anschlüsse auf der rechten Seite vollkommen von den beiden Heizleiterisolierungen 21, 22 eingeschlossen, so dass eine fluiddichte Isolierung erreicht werden kann.

Die Adapterelemente 3a, 3b weisen jeweils einen Adapterkörper 30 auf, welcher mittels einer stoffschlüssigen Verbindung 31 wie z.B. einer Laser- bzw. Rotationsschweißverbindung 31 oder einer Klebeverbindung 31 mit der zweiten Heizleiterisolierung 22 druckdicht verbunden ist. Über die Adapterkörper 3a, 3b kann das Fluid zwischen dem Innenvolumen 11 und der Umgebung wie z.B. anderen Schläuchen oder Aggregaten ausgetauscht werden (nicht dargestellt).

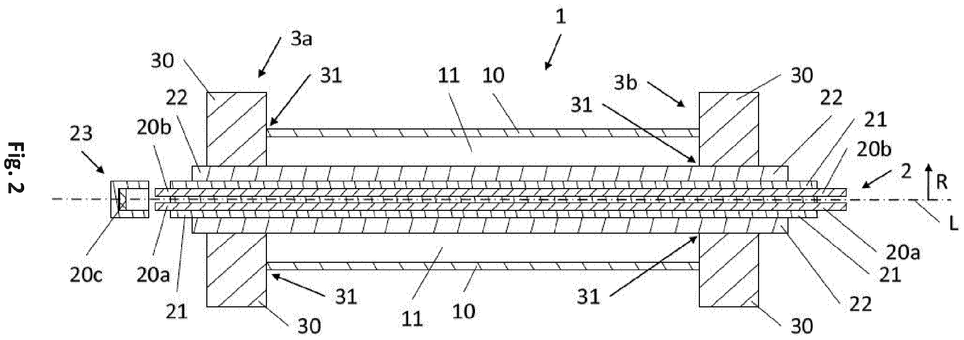

Fig. 2 zeigt eine schematische Schnittdarstellung eines erfindungsgemäßen beheizbaren Schlauches 1 gemäß einer zweiten Ausführungsform. In diesem Fall wird die Heizleiterverbindung 20c in einem separaten Abschlusselement 23 angeordnet, welches auf die Ende der beiden Heizleiter 20a, 20b auf der linken Seite aufgesetzt wird, nachdem diese durch das erste Adapterelement 3a aus dem Innenvolumen 11 herausgeführt wurden. Auf diese Weise kann der Heizleiter in fortlaufender Länge hergestellt, auf den jeweiligen Anwendungsfall zugeschnitten und verarbeitet werden, was die Herstellung einfacher und günstiger gestalten kann. Der Abschluss mit der Heizleiterverbindung 20c erfolgt dann am Endprodukt durch das Abschlusselement 23.

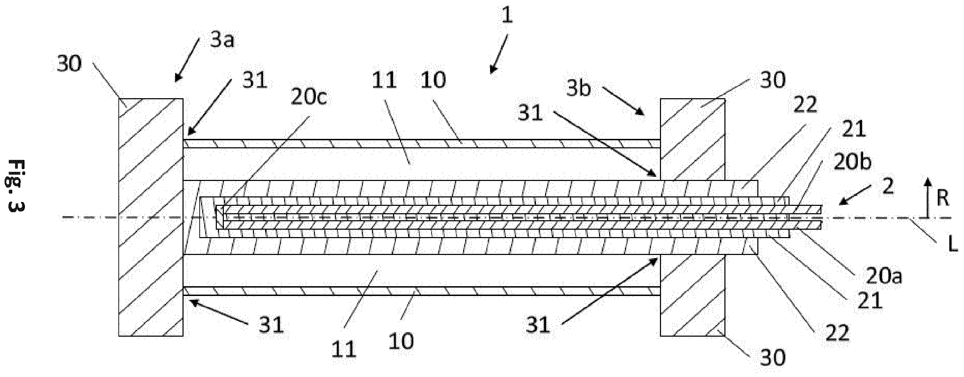

Fig. 3 zeigt eine schematische Schnittdarstellung eines erfindungsgemäßen beheizbaren Schlauches 1 gemäß einer dritten Ausführungsform. Hier ist der Heizleiter 2 wie bei der ersten Ausführungsform ausgebildet, endet jedoch innerhalb des Innenvolumens 11 an der Innenseite des ersten Adapterelements 3a. An dieser Stelle kann der Heizleiter 2 stoffschlüssig befestigt sein. Auf diese Weise kann ein Durchgang durch das erste Adapterelement 3a vermieden werden, was gleichzeitig Leckageprobleme bei diesem Durchgang ausschließt.

In allen drei Ausführungsformen sind die beiden Heizleiter 20a, 20b gemeinsam zuerst von der von der ersten Heizleiterisolierung 21 und dann von der zweiten Heizleiterisolierung 22 ummantelt. Alternativ können die beiden Heizleiter 20a, 20b auch jeweils räumlich separat von der gleichen ersten Heizleiterisolierung 21 oder auch von unterschiedlichen ersten Heizleiterisolierungen 21 ummantelt sein und dann von der gemeinsamen zweiten Heizleiterisolierung 22, welche in diesem Fall die beiden ersten Heizleiterisolierungen 21 voneinander trennt, d.h. auch zwischen den beiden 20a, 20b angeordnet ist. Dies kann die Herstellung vereinfachen, weil die beiden Heizleiter 20a, 20b mit ihrer jeweiligen ersten Heizleiterisolierung 21 separat hergestellt werden können und erst danach innerhalb der zweiten Heizleiterisolierung 22 zusammengeführt werden. Auch kann die zweite Heizleiterisolierung 22 die beiden Heizleiter 20a, 20b getrennt ummanteln, so dass sich zwischen ihnen ein Abstand ergeben kann.

### Bezugszeichenliste

### (Teil der Beschreibung)

- L: Längsachse
- R: radiale Richtung, senkrecht zur Längsachse L

- 1: (elektrisch) beheizbarer Schlauch, SCR-Schlauch
- 10: Außenwand
- 11: Innenvolumen

- 2: (elektrisches) Heizelement
- 20a: erster (elektrischer) Heizleiter, Hinleiter
- 20b: zweiter (elektrischer) Heizleiter, Rückleiter
- 20c: Heizleiterverbindung
- 21: erste Heizleiterisolierung
- 22: zweite Heizleiterisolierung
- 23: Abschlusselement

- 3a: erstes Adapterelement, erstes Anschlusselement, erster Quick-Connector
- 3b: zweites Adapterelement, zweites Anschlusselement, zweiter Quick-Connector
- 30: Adapterkörper, Anschlusskörper
- 31: stoffschlüssige Verbindung zwischen zweiter Heizleiterisolierung 22 und Adapterkörper 30, Laserschweißverbindung, Rotationsschweißverbindung, Klebeverbindung

## Patentansprüche

1. Beheizbarer Schlauch (1) zur Leitung fluider, gasförmiger und/oder pastöser Medien, mit
einer Außenwand (10), die ein Innenvolumen (11) einschließt, und
einem Heizelement (2), welches innerhalb des Innenvolumens (11) angeordnet ist,
- wobei das Heizelement (2) einen ersten Heizleiter (20a) und einen zweiten Heizleiter (20b) aufweist und
- der erste Heizleiter (20a) und der zweite Heizleiter (20b) durch eine Heizleiterverbindung (20c) zu einer Schleife verbunden sind, so dass ein Heizleiter (20a, 20b) einen Hinleiter (20a, 20b) und der andere Heizleiter (20a, 20b) einen Rückleiter (20a, 20b) bildet,
- wobei der erste Heizleiter (20a) und der zweite Heizleiter (20b) oder der erste Heizleiter (20a), der zweite Heizleiter (20b) und die Heizleiterverbindung (20c) gegenüber dem Innenvolumen (11) jeweils einzeln oder gemeinsam von einer ersten Heizleiterisolierung (21) umgeben werden,
- wobei der erste Heizleiter (20a) und der zweite Heizleiter (20b) oder der erste Heizleiter (20a), der zweite Heizleiter (20b) und die Heizleiterverbindung (20c) gegenüber dem Innenvolumen (11) jeweils einzeln oder gemeinsam von einer zweiten Heizleiterisolierung (22) umgeben werden, welche die erste Heizleiterisolierung (21) umgibt,
wobei das Heizelement (2) durch wenigstens ein erstes Adapterelement (3a) hindurch in das Innenvolumen (11) geführt ist, die Außenwand (10) und wenigstens die zweite Heizleiterisolierung (22) über das erste Adapterelement (3a) und/oder ein zweites Adapterelement (3b) verbunden sind und das erste Adapterelement (3a) und/oder das zweite Adapterelement (3b) einen Adapterkörper (30) aufweist, **dadurch gekennzeichnet, dass** der Adapterkörper (30) mit der zweiten Heizleiterisolierung (22) mittels einer stoffschlüssigen Verbindung (31) verbunden ist.

2. Beheizbarer Schlauch (1) nach Anspruch 1,
**dadurch gekennzeichnet, dass** die Heizleiterverbindung (20c) relativ zum ersten Adapterelement (3a) auf der entgegengesetzten Seite wie das Innenvolumen (11) angeordnet ist.

3. Beheizbarer Schlauch (1) nach Anspruch 1, **dadurch gekennzeichnet, dass** die Heizleiterverbindung (20c) relativ zum ersten Adapterelement (3a) auf der gleichen Seite wie das Innenvolumen (11) angeordnet ist.

4. Beheizbarer Schlauch (1) nach einem der vorherigen Ansprüche,
**dadurch gekennzeichnet, dass** der erste Heizleiter (20a), der zweite Heizleiter (20b) und die Heizleiterverbindung (20c) ein elektrisch leitfähiges Kabel, ein elektrisch leitfähiger Faden oder ein elektrisch leitfähiges Element sind.

5. Beheizbarer Schlauch (1) nach Anspruch 4,
**dadurch gekennzeichnet, dass** der erste Heizleiter (20a), der zweite Heizleiter (20b) und die Heizleiterverbindung (20c) ein PTC-Widerstand sind.

6. Beheizbarer Schlauch (1) nach einem der vorherigen Ansprüche,
**dadurch gekennzeichnet, dass** die Außenwand (10) ein Elastomer, einen Kunststoff, insbesondere ein Polyamid (PA), insbesondere PA 12 oder Polyphthalamid (PPA) oder Polyphenylensulfid (PPS), oder ein Polyurethan aufweist.

7. Beheizbarer Schlauch (1) nach Anspruch 1, **dadurch gekennzeichnet, dass** die erste Heizleiterisolierung (21) ein Fluorcarbon, insbesondere ein Perfluor (Ethylen-Propylen-) Kunststoff (FEP), ein modifiziertes Fluoralkoxy (MFA) oder ein Perfluoralkoxylalkan (PFA) aufweist.

8. Beheizbarer Schlauch (1) nach Anspruch 1, **dadurch gekennzeichnet, dass** die zweite Heizleiterisolierung (22) ein Elastomer, einen Kunststoff, insbesondere ein Polyamid (PA), insbesondere PA 12 oder Polyphthalamid (PPA) oder Polyphenylensulfid (PPS), oder ein Polyurethan aufweist.

9. Beheizbarer Schlauch (1) nach Anspruch 1, **dadurch gekennzeichnet, dass** die stoffschlüssige Verbindung (31) eine Laserschweißverbindung (31), eine Rotationsschweißverbindung (31) oder eine Klebeverbindung (31) ist.

10. Kraftfahrzeug mit einem beheizbaren Schlauch (1) nach einem der vorherigen Ansprüche.

## Claims

1. Heatable hose (1) for conducting fluid, gaseous and/or pasty media, having
an outer wall (10) which encloses an internal volume (11), and
a heating element (2) which is arranged within the internal volume (11),
- wherein the heating element (2) has a first heating conductor (20a) and a second heating conductor (20b), and
- the first heating conductor (20a) and the second heating conductor (20b) are connected to form a loop by way of a heating conductor connection (20c), such that one heating conductor (20a, 20b) forms a forward conductor (20a, 20b) and the other heating conductor (20a, 20b) forms a return conductor (20a, 20b),
- wherein the first heating conductor (20a) and the second heating conductor (20b) or the first heating conductor (20a), the second heating conductor (20b) and the heating conductor connection (20c) are in each case individually or jointly surrounded with respect to the internal volume (11) by a first heating conductor insulator (21),
- wherein the first heating conductor (20a) and the second heating conductor (20b) or the first heating conductor (20a), the second heating conductor (20b) and the heating conductor connection (20c) are in each case individually or jointly surrounded with respect to the internal volume (11) by a second heating conductor insulator (22) which surrounds the first heating conductor insulator (21),
wherein the heating element (2) is led into the internal volume (11) through at least one first adapter element (3a), the outer wall (10) and at least the second heating conductor insulator (22) are connected by way of the first adapter element (3a) and/or a second adapter element (3b) and the first adapter element (3a) and/or the second adapter element (3b) has an adapter body (30), **characterized in that** the adapter body (30) is connected to the second heating conductor insulator (22) by way of a cohesive connection (31).

2. Heatable hose (1) according to Claim 1, **characterized in that** the heating conductor connection (20c) is arranged on the opposite side of the first adapter element (3a) in relation to the internal volume (11).

3. Heatable hose (1) according to Claim 1, **characterized in that** the heating conductor connection (20c) is arranged on the same side of the first adapter element (3a) as the internal volume (11).

4. Heatable hose (1) according to one of the preceding claims,
**characterized in that** the first heating conductor (20a), the second heating conductor (20b) and the heating conductor connection (20c) are an electrically conductive cable, an electrically conductive thread or an electrically conductive element.

5. Heatable hose (1) according to Claim 4,
**characterized in that** the first heating conductor (20a), the second heating conductor (20b) and the heating conductor connection (20c) are a PTC resistor.

6. Heatable hose (1) according to one of the preceding claims,
**characterized in that** the outer wall (10) has an elastomer, a plastic, in particular a polyamide (PA), in particular PA 12, or polypthalamide (PPA) or polyphenylene sulfide (PPS), or a polyurethane.

7. Heatable hose (1) according to Claim 1,
**characterized in that** the first heating conductor insulator (21) has a fluorocarbon, in particular a perfluoro (ethylene propylene) plastic (FEP), a modified fluoroalkoxy (MFA) or a perfluoroalkoxy alkane (PFA).

8. Heatable hose (1) according to Claim 1, **characterized in that** the second heating conductor insulator (22) has an elastomer, a plastic, in particular a polyamide (PA), in particular PA 12, or polypthalamide (PPA) or polyphenylene sulfide (PPS), or a polyurethane.

9. Heatable hose (1) according to Claim 1,
**characterized in that** the cohesive connection (31) is a laser-welded connection (31), a rotary-welded connection (31) or an adhesive connection (31).

10. Motor vehicle having a heatable hose (1) according to one of the preceding claims.

## Revendications

1. Tuyau souple pouvant être chauffé (1) pour le transport de milieux fluides, gazeux et/ou pâteux, avec une paroi extérieure (10), qui entoure un volume intérieur (11), et un élément chauffant (2), qui est disposé à l'intérieur du volume intérieur (11),
- dans lequel l'élément chauffant (2) présente un premier conducteur chauffant (20a) et un second conducteur chauffant (20b),
- dans lequel le premier conducteur chauffant (20a) et le second conducteur chauffant (20b) sont reliés par une liaison de conducteur chauffant (20c) en une boucle, de telle manière qu'un conducteur chauffant (20a, 20b) forme un conducteur d'entrée (20a, 20b) et que l'autre conducteur chauffant (20a, 20b) forme un conducteur de retour (20a, 20b),
- dans lequel le premier conducteur chauffant (20a) et le second conducteur chauffant (20b) ou le premier conducteur chauffant (20a), le second conducteur chauffant (20b) et la liaison de conducteur chauffant (20c) sont entourés chacun individuellement ou ensemble, par rapport au volume intérieur (11), par une première isolation de conducteur chauffant (21),
- dans lequel le premier conducteur chauffant (20a) et le second conducteur chauffant (20b) ou le premier conducteur chauffant (20a), le second conducteur chauffant (20b) et la liaison de conducteur chauffant (20c) sont entourés chacun individuellement ou ensemble, par rapport au volume intérieur (11), par une seconde isolation de conducteur chauffant (22), qui entoure la première isolation de conducteur chauffant (21),
- dans lequel l'élément chauffant (2) est conduit dans le volume intérieur (11) à travers un premier élément d'adaptateur (3a), la paroi extérieure (10) et au moins la seconde isolation de conducteur chauffant (22) sont reliées par le premier élément d'adaptateur (3a) et/ou un second élément d'adaptateur (3b) et le premier élément d'adaptateur (3a) et/ou le second élément d'adaptateur (3b) présente un corps d'adaptateur (30),
**caractérisé en ce que** le corps d'adaptateur (30) est assemblé à la seconde isolation de conducteur chauffant (22) au moyen d'un assemblage matériel (31).

2. Tuyau souple pouvant être chauffé (1) selon la revendication 1, **caractérisé en ce que** la liaison de conducteur chauffant (20c) est disposée par rapport au premier élément d'adaptateur (3a) sur le côté opposé au volume intérieur (11).

3. Tuyau souple pouvant être chauffé (1) selon la revendication 1, **caractérisé en ce que** la liaison de conducteur chauffant (20c) est disposée par rapport au premier élément d'adaptateur (3a) sur le même côté que le volume intérieur (11).

4. Tuyau souple pouvant être chauffé (1) selon l'une quelconque des revendications précédentes, **caractérisé en ce que** le premier conducteur chauffant (20a), le second conducteur chauffant (20b) et la liaison de conducteur chauffant (20c) sont un câble électriquement conducteur, un fil électriquement conducteur ou un élément électriquement conducteur.

5. Tuyau souple pouvant être chauffé (1) selon la revendication 4, **caractérisé en ce que** le premier conducteur chauffant (20a), le second conducteur chauffant (20b) et la liaison de conducteur chauffant (20c) sont une résistance PTC.

6. Tuyau souple pouvant être chauffé (1) selon l'une quelconque des revendications précédentes, **caractérisé en ce que** la paroi extérieure (10) présente un élastomère, une matière plastique, en particulier un polyamide (PA), en particulier du PA 12 ou du polyphtalamide (PPA) ou du sulfure de polyphénylène (PPS), ou un polyuréthane.

7. Tuyau souple pouvant être chauffé (1) selon la revendication 1, **caractérisé en ce que** la première isolation de conducteur chauffant (21) présente un fluorocarbone, en particulier une matière plastique perfluoro(éthylène-propylène) (FEP), un fluoroalcoxy modifié (MFA) ou un perfluoroalcoxyalcane (PFA).

8. Tuyau souple pouvant être chauffé (1) selon la revendication 1, **caractérisé en ce que** la seconde isolation de conducteur chauffant (22) présente un élastomère, une matière plastique, en particulier un polyamide (PA), en particulier du PA 12 ou du polyphtalamide (PPA) ou du sulfure de polyphénylène (PPS), ou un polyuréthane.

9. Tuyau souple pouvant être chauffé (1) selon la revendication 1, **caractérisé en ce que** l'assemblage matériel (31) est un assemblage par soudage au laser (31), un assemblage par soudage par rotation (31) ou un assemblage collé (31).

10. Véhicule automobile avec un tuyau souple pouvant être chauffé (1) selon l'une quelconque des revendications précédentes.
